# EUROPÄISCHE PATENTSCHRIFT

(11) **EP 1 496 313 B1**
(45) Veröffentlichungstag und Bekanntmachung des Hinweises auf die Patenterteilung: **07.02.2007**
(21) Anmeldenummer: 03026793.4
(22) Anmeldetag: 22.11.2003
(51) Int. Cl.: F24D 19/10, F24D 10/00

(54) **Verfahren und Einrichtung zur Einstellung der aus dem Fernwärmenetz bezogenen Wärmemenge auf den wirklichen Bedarfsfall einer Hausanschlussstation**
Method and installation for controlling the amount of heat taken from district heating appropriate to the actual need of a domestic distribution point
Procédé et dispositif pour régler le débit de chauffe pris d'un chauffage urbain pour les besoins réels d'une sous-station domestique

(30) Priorität: 30.06.2003 DE 10329565
(43) Veröffentlichungstag der Anmeldung: 12.01.2005
(73) Patentinhaber: Vertrieb und Grosshandel von Heizungs-, Sanitär- und Elektroerzeugnissen, 13055 Berlin (DE)
(72) Erfinder: Schramm, Bruno, Dipl.-Ing., 15537 Grünheide (DE); Lang, Jürgen, Dipl.-Ing., 12557 Berlin (DE)
(74) Vertreter: Burghardt, Dieter

(56) Entgegenhaltungen:
- EP-A- 0 936 413
- DE-A- 1 673 461
- DE-A- 2 747 969
- DE-A- 19 604 189
- DE-C- 19 960 527
- DE-U- 20 110 854

## Beschreibung

Die Erfindung betrifft eine Übergabestation für eine durch Fern- und Nahwärme oder Heizkessel gespeiste Hausanschlußstation mit einer sich selbsttätig einstellenden Einrichtung zur Wärmemengenbegrenzung auf den wirklichen Bedarfsfall und ein Verfahren zur bedarfsabhängigen Ermittlung der Wärmemenge mittels eines Stellventils, das Bestandteil einer Übergabestation ist.

In der Praxis wird der benötigte Fernwärmemassenstrom entweder vom Planer errechnet oder auf der Basis von Erfahrungswerten geschätzt und vom Lieferer der Fernwärme als Maximalwert an der Übergabestation verbindlich eingestellt. Hiernach werden vom Lieferer die Anschlußwertkosten erhoben.

Die bekannten Übergabestationen zur Übergabe von vom Lieferer bereitgestellter Fernwärme an eine Hausanschlußstation mit einem oder mehreren Heizkreisläufen mit oder ohne einer Warmwasserbereitungseinrichtung oder anderen Verbrauchern weisen zur Sicherung der auf die Außentemperaturen bezogenen Vorlauftemperatur an der Fernwärme-Übergabestation einen kombinierten Volumenstrom- und Differenzdruckregler im Rücklauf auf. Dieser Regler hat einerseits die Aufgabe, Druckschwankungen zwischen Vorlauf und Rücklauf auszugleichen, damit hinter der Übergabestation ein bestimmter Differenzdruck nicht überschritten wird. Andererseits wird mittels dieses Reglers der Anschlußwert für die die Hausanschlußstation ausgelegt ist, fixiert. Nach diesem eingestellten/bestimmten Wert werden die Anschlußkosten bestimmt. An diesem Volumenstrom- und Differenzdruckregler wird der Volumenstrom zum Betreiben der Hausanschlußstation fest eingestellt, ohne den wirklichen Anschlußwert ermitteln zu können. Der Nutzer der nachgeordneten Hausanschlußstation kann auf diesen eingestellten Wert keinen Einfluß nehmen. Für eine Bestimmung dieses Wertes fehlen an der Übergabestation die installierten technischen Mittel und einfache Verfahren zur Bestimmung dieses wirklichen, vom Verbraucher benötigten Anschlußwertes und der automatischen Einregulierung des Volumenstromes an der Übergabestation auf diesen.

Ziel der Erfindung ist die Senkung der Anschlußwertkosten bei einer Hausanschlußstation bzw. Begrenzung dieser auf die wirklich benötigte Wärmemenge und den technischen Aufwand zur Umsetzung hierfür zu minimieren, wobei zu sichern ist, daß eine Absenkung der Vorlauftemperatur zur Warmwasserbereitung vermieden wird und dadurch die Gefahr der Legionellenvermehrung im erwärmten Trinkwasser nicht eintritt.

Der Erfindung liegt die Aufgabe zugrunde, ein Verfahren zur Bestimmung des tatsächlichen Anschlußwertes einer Hausanschlußstation und eine Einrichtung zur Realisierung des Verfahrens an einer Übergabestation für die Fernwärme zu entwickeln.

Die Aufgabe wurde erfindungsgemäß durch die in den unabhängigen Ansprüchen angegebenen technischen Maßnahmen gelöst.

Die Erfindung soll nachfolgend an einem Ausführungsbeispiel näher erläutert werden. In der zugehörigen Zeichnung wird eine Prinziplösung mit einem nach dem erfindungsgemäßen Verfahren arbeitenden Volumenstromregler in der Rücklaufleitung einer Fernwärme-Übergabestation gezeigt.

Das erfindungsgemäß vorgeschlagene Verfahren greift auf die in der Hausanschlußstation 1 installierte Regelungstechnik 2 zurück, in der eine bestimmte, nicht dargestellte Heizkurve für die Hausanschlußstation 1 programmiert ist. Mittels dieser wird bei einer gemessenen Außentemperatur T_{A} dem Heizungsvorlauf 3 eine bestimmte Temperatur T_{H} zugeordnet. Auf diese Temperatur T_{H} ist der benötigte Volumenstrom 4 der Übergabestation 5 abzustellen. Über ein im Rücklauf 6 des Heizungskreises vorgesehenes Regelventil 7 wird die Vorlauftemperatur T_{H} eingeregelt, wobei das Regelventil 7 mit einem im Vorlauf 8 zur Warmwasserbereitung 9 vorgesehenen Regelventil 10 regelungstechnisch zusammenwirkt, indem das Regelventil 7 den Volumenstrom im Rücklauf 6 und damit die Temperatur T_{H} im Heizungsvorlauf 3 bei geöffnetem Regelventil 10 im Vorlauf 8 zur Warmwasserbereitung drosselt. Zusätzlich ist Stellventil 11, das von der in der Hausanschlußstation 1 installierten Regelungstechnik 2 gesteuert wird, vorgesehen. Dieses Stellventil 11 wird in vorgegebenen Verfahrenschritten, d.h. nach einem speziellen Regelalgorithmus betätigt. Nach dem erfindungsgemäßen Verfahren wird dieses Stellventil 11 während des Betriebes der Hausanschlußstation 1 schrittweise über eine bestimmte Zeitdauer (z.B. ca. 5% in 24 Stunden) in eine vorbestimmte Minimalstellung gebracht. Können in dieser Minimalstellung des Stellventils 11 die Sollwerttemperaturen für die Heizung und Warmwasserbereitung innerhalb von vorgegebenen Toleranzen nicht mehr gesichert werden, dann erweist es sich, daß die Drosselung des Volumenstromes 4 in der Übergabestation 5 zu groß ist. Hierauf wird das Stellventil 11 gesteuert von der Regelungstechnik 2 bis in die vorhergehende Stellung, geöffnet, d.h. bis auf die Ausgangsposition vor der eingeleiteten Drosselung, die sich in dieser Belastungsphase als zu groß erwiesen hat, gebracht. Anschließend wird in einem folgenden, jedoch kürzer gewählten Schließintervall das Stellventil 11 wieder geschlossen. Nachdem sich die Hausanschlußstation 1 wieder in einem Beharrungszustand befindet, erfolgt eine erneute Überprüfung der Sollwerttemperaturen für die Heizung und Warmwasserbereitung innerhalb der Hausanschlußstation 1. Sollte dabei festgestellt werden, daß sich die eingestellten Temperaturen für die Heizung und Warmwasserbereitung von den Sollwerttemperaturen unterscheiden, wird eine erneute Betätigung des Stellventils 11 vorgenommen. Das Stellventil 11 wird dann schrittweise geöffnet und geschlossen, aber geht dabei nicht auf die Ausgangsstellung zurück. Im sogenannten Pilgerschrittverfahren nähert sich die Stellung des Stellventils 11 asymptodisch einer Drosselstellung, die den wirklichen erforderlichen Volumenstrom als Anschlußwert bestimmt. Sollte bei dieser schrittweise vorgenommen Anschlußwertoptimierung sich ergeben, daß bei Spitzenbelastungen die Solltemperaturen nicht eingehalten werden, wird das Stellventil 11 erneut betätig und dieses in die vorletzte Position gebracht.

Dieses nach dem erfindungsgemäßen Verfahren arbeitende und von der Regelungstechnik 2 gesteuerte Stellventil 11 ist in der Übergabestation 5 für die Fernwärme vor dem Differenzdruck- und Volumenstromregler installiert. Nach einem wesentlichen Merkmal der Erfindung ist das Stellventil 11 in der Übergabestation 5 mit dem Differenzdruck- und Volumenstromregler kombiniert. Hierzu wird dieser mit einem Motorantrieb ausgestattet. Dieser wird, nachdem sich der eigentliche Anschlußwert von selbst eingestellt hat und anschließend fixiert worden ist, wieder entfernt.

Durch das erfindungsgemäße Verfahren ist es möglich, mit in einer Übergabestation 5 vorhandenen technischen Mitteln den wirklich benötigten Wärmebedarf einer Hausanschlußstation 1 festzustellen und an einem vorhandenen Differenzdruck/Volumenstromregler zu fixieren. Durch die Anwendung des Verfahrens können die Anschlußkosten einer Hausanschlußstation 1 gesenkt werden.

### Aufstellung der Bezugszeichen

- 1: Hausanschlußstation
- 2: Regelungstechnik
- 3: Heizungsvorlauf
- 4: Volumenstrom
- 5: Übergabestation
- 6: Rücklauf
- 7: Regelventil
- 8: Vorlauf
- 9: Warmwasserbereitung
- 10: Regelventil
- 11: Stellventil
- 12: Differenzdruck-/Volumenstromregler
- 13: Stellmotor

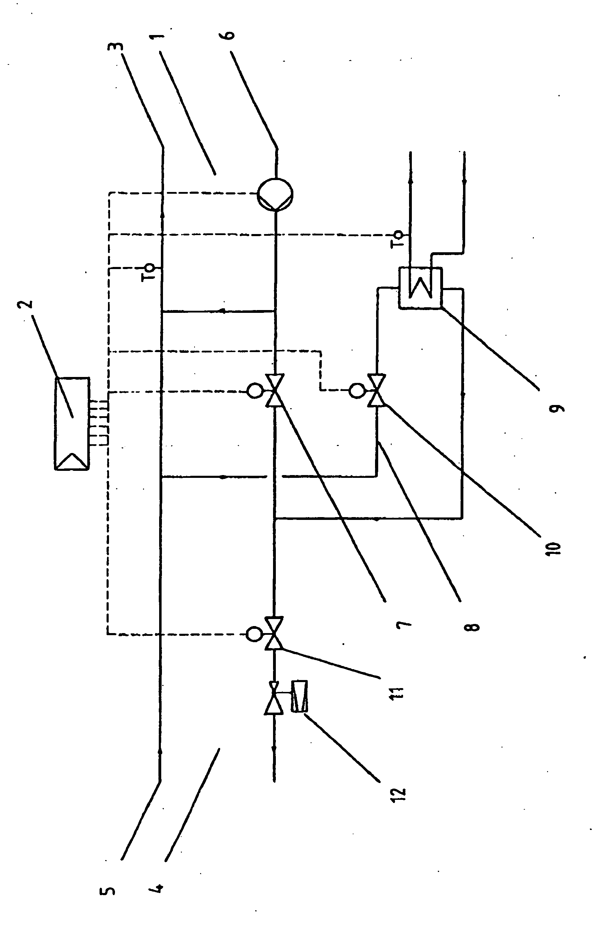

## Patentansprüche

1. Verfahren zur Einstellung der auf den wirklichen Bedarfsfall einer Hausanschlußstation abgestimmten zu liefernden Wärmemenge einer Übergabestation aus dem Fernwärmenetz, ***dadurch gekennzeichnet,* daß** zur Ermittlung des wirklichen Wärmebedarfs nach einem Vergleich der Außentemperatur T_{A} mit den in einer Heizkurve gespeicherten Werten eine Drosselung des Massenstromes (4) auf einen vorgegebenen Minimaldurchsatz des Massenstromes (4) einer FernwärmeÜbergabestation (5) in definierten zeitlichen Folgen erfolgt, nach Erreichen des vorgegebenen Durchsatzwertes die Temperaturwerte des Heizungsvorlaufes (3) und die des Vorlaufes (8) der Warmwasserbereitungsanlage (9) mit den Solltemperturwerten verglichen werden und bei einer Abweichung dieser Ist-Werte von den Soll-Werten eine Korrektur des Durchsatzes des Massenstromes (4) auf einen Wert erfolgt, der unterhalb des ursprünglichen, vor der vorgenommenen Drosselung des Massenstromes (4) bestehenden Durchsatzwertes liegt, und dann anschließend schrittweise eine erneute Reduzierung des Durchsatzes des Massenstromes (4) auf einen korrigierten reduzierten Durchsatz des Massenstromes (4) erfolgt und dann anschließend nach einer Beharrungsphase ein erneuter Vergleich der sich einstellenden Werte der Temperaturen im Heizungsvorlauf (3) und im Vorlauf (8) der Warmwasserbereitungsanlage (10) mit den Soll-Werten erfolgt, worauf bei einer Abweichung von diesen eine erneute, schrittweise Erhöhung des Durchsatzes des Massenstromes (4) bis auf einen Wert, der unterhalb des bereits korrigierten Ausgangeswertes des Durchsatzes des Massenstromes (4) liegt, vorgenommen wird und sich diese stufenweise Anpassung des Massenstromes (4) an den wirklichen Bedarf im sogenannten Pilgerschrittverfahren, bis eine asymptotische Annäherung an den wirklichen Bedarfsfall vollzogen ist, vorgenommen wird.

2. Verfahren nach Anspruch 1, ***dadurch gekennzeichnet,* daß** die Anschlußoptmierung des Durchsatzes des Massenstromes (4) einer Fernwärmeübergabestation (5) in aufeinanderfoigenden Drosselungsintervallen und Intervallen zur Strömungsfreigabe des Massenstromes (4) nach einem vorgegeben Regelalgorithmus erfolgt.

3. Verfahren nach Anspruch 1 und 2, ***dadurch gekennzeichnet,* daß** die Anschlußoptmierung des Durchsatzes des Massenstromes (4) einer Fernwärmeübergabestation (5) von der Regelungstechnik (2) der Hausanschlußstation (1) gesteuert wird.

4. Einrichtung zur Einstellung einer zu liefernden Wärmemenge aus dem Fernwärmenetz über eine mit einem Differenzdruck-/Volumenstromregler ausgestattete Übergabestation nach dem Verfahren nach Anspruch 1 bis 3, ***dadurch gekennzeichnet,* daß** vor dem Differenzdruck-/Volumenstromregler (12) der Übergabestation ein zusätzliches, von der Regelungstechnik (2) der Hausanschlußstation (1) gesteuertes Stellventil (11) vorgesehen ist.

5. Einrichtung nach Anspruch 4, ***dadurch gekennzeichnet,* daß** der Differenzdruck-/Volumenstromregler (12) und das Stellventil (11) eine Funktionseinheit bilden.

6. Einrichtung nach Anspruch 4 und 5, ***dadurch gekennzeichnet,* daß** der Differenzdruck-/Volumenstromregler (12) zeitweise, d.h. bis zum Abschluß der Anschlußoptimierung mit einem Stellmotor (13) versehen ist.

7. Einrichtung nach Anspruch 4 bis 6, ***dadurch gekennzeichnet,* daß** in der Hausanschlußstation (1) im Rücklauf (6) des Heizkreises ein zusätzliches, von der Reglungstechnik (2) gesteuertes Regelventil (7) und im Vorlauf (8) der Warmwasserbereitungsanlage (9) ein zusätzliches, von der Reglungstechnik (2) gesteuertes Regelventil (10) vorgesehen ist.

## Claims

1. A method for adjusting the heat quantity of a transfer station from a long-distance heat network, said heat quantity being is coordinated with the actual requirement of a local connection station, ***characterized in* that** a limiting of the mass flow (4) to a predetermined minimum throughput of the mass flow (4) of a long-distance heat transfer station (5) is carried out in defined chronological sequences for the determination of the actual heat requirement after to a comparison of the outside temperature T_{A} with the values stored in a heat curve and **in that** the temperature values of the heating feed (3) and of the return (8) of the hot water supply unit (9) are compared with the set temperature values and, if these actual values deviate from the set values, a correction of the throughput of the mass flow (4) is carried out to a value, which lies below the original throughput value, which existed before the limiting of the mass flow (4) had taken place, and subsequently a gradual reduction of the throughput of the mass flow (4) is then again carried out to a corrected reduced throughput of the mass flow (4) and subsequently, after a resting phase, a comparison of the values of the temperatures appearing in the heating feed (3) and in the return (8) of the hot water supply unit (10) with the set values is then again carried out, whereupon, in response to a deviation from these set values, a gradual increase of the throughput of the mass flow (4) to a value, which lies below the already corrected output value of the throughput of the mass flow (4) is again carried out, and **in that** this gradual adaptation of the mass flow (4) to the actual requirement is carried out in the so-called step-back procedure until an asymptomatic approximation to the actual requirement is implemented.

2. The method according to claim 1, ***characterized* in that** the connection optimization of the throughput of the mass flow (4) of a long-distance heat transfer station (5) is carried out in consecutive limiting intervals and intervals for the flow release of the mass flow (4) according to a predetermined control algorithm.

3. The method according to claims 1 and 2, ***characterized in* that** the connection optimization of the throughput of the mass flow (4) of a long-distance heat transfer station (5) is controlled by the control technique (2) of the local connection station (1).

4. A device for adjusting a heat quantity, which is to be supplied, from the long-distance heat network via a transfer station equipped with a pressure differential/volume flow regulator according to the method according to claims 1 to 3, ***characterized in* that** provision is made for an additional control valve (11), which is controlled by the control technique (2) of the local connection station (1), upstream of the pressure differential/volume flow regulator (12).

5. The device according to claim 4, ***characterized in* that** the pressure differential/volume flow regulator (12) and the control valve (11) form a functional unit.

6. The device according to claims 4 and 5, ***characterized in* that** the pressure differential/volume flow regulator (12) is intermittently provided with an actuator (13), i.e. until the completion of the connection optimization.

7. The device according to claims 4 to 6, ***characterized in* that** an additional control valve (7), which is controlled by the control technique (2) is provided in the local connection station (1) in the return (6) of the heating circuit and an additional control valve (10), which is controlled by the control technique (2) is provided in the feed (8) of the hot water supply unit (9).

## Revendications

1. Procédé pour régler la quantité de chaleur à fournir par une station d'alimentation à partir du réseau de chauffage à distance, conformément aux besoins réels d'une station de raccordement à une maison, **caractérisé en ce que** pour connaître les besoins réels en chauffage après avoir comparé la température extérieure T_{A} avec des valeurs enregistrées sur une courbe de chauffage, le débit massique (4) est réduit, à intervalles de temps déterminés, à un niveau de débit massique (4) minimum pour une station d'alimentation en chauffage à distance (5), et une fois que la valeur de débit indiquée est atteinte, les valeurs de température du cycle d'arrivée de chauffage (3) et celles du cycle d'arrivée (8) de l'installation de préparation d'eau chaude à distance (9) sont comparées avec les valeurs de température théoriques, et en cas d'écart des valeurs réelles par rapport aux valeurs théoriques, le débit massique (4) fourni est corrigé (4) en étant réglé sur une valeur inférieure à la valeur du débit de départ, trouvée avant d'effectuer la réduction prévue du débit massique (4), puis une nouvelle réduction progressive du débit massique (4) fourni est effectuée en fonction du débit massique (4) réduit et corrigé, et suite à une phase de persévérance, les valeurs de température réglées au cours du cycle de chauffage (3) et du cycle d'arrivée (8) de l'installation de préparation d'eau chaude à distance (10) sont à nouveau comparées avec les valeurs théoriques, sachant que dans le cas d'un écart entre ces valeurs, une nouvelle augmentation progressive du débit massique (4) fourni est effectuée, jusqu'à l'obtention d'une valeur inférieure à la valeur de départ déjà corrigée du débit massique (4) fourni, de façon à ce que cette adaptation progressive du débit massique (4) permette de se rapprocher de façon asymptotique des besoins réels, à l'aide du dénommé procédé du pas de pèlerin.

2. Procédé selon la revendication 1, **caractérisé en ce que** l'optimisation du raccordement au débit massique (4) fourni par une station de livraison de chaleur à distance (5) avec des paliers de réduction consécutifs et des intervalles de mise à disposition du débit massique (4), est réalisée d'après un algorithme de réglage prescrit.

3. Procédé selon la revendication 1 ou 2, **caractérisé en ce que** l'optimisation du raccordement au débit massique (4) fourni par une station de livraison de chaleur à distance (5) est commandée à partir d'un dispositif de réglage placé au niveau de la station de raccordement à la maison (1).

4. Procédé permettant de régler une quantité de chaleur fournie par le réseau de chauffage à distance, par l'intermédiaire d'une station de livraison équipée d'un dispositif de réglage du volume débité et de la différence de pression, selon le procédé présenté dans les revendications 1 à 3, **caractérisé en ce qu'**une soupape de réglage (11) supplémentaire est installée devant le dispositif de réglage (12) du débit fourni et de la différence de pression qui est situé sur la station de livraison, et commandée à partir du dispositif de réglage (2) de la station de raccordement à la maison (1).

5. Installation selon la revendication 4, **caractérisée en ce que** le dispositif de réglage (12) du volume débité et de la différence de pression forme une unité fonctionnelle avec la soupape de réglage (11).

6. Installation selon les revendications 4 et 5, **caractérisée en ce que** le dispositif de réglage (12) du volume débité et de la différence de pression est à certains moments équipé d'un moteur de réglage (13), c'est à dire jusqu'à ce que l'optimisation du raccordement soit achevée.

7. Installation selon les revendications 4 à 6, **caractérisé en ce que** dans la station de raccordement à une maison (1), une soupape de réglage (7) supplémentaire, commandée par le dispositif de réglage (2) est prévue pour le reflux (6) de chauffage, et une soupape de réglage (10) supplémentaire commandée par le dispositif de réglage (2) est prévue pour le cycle d'arrivée (8) de l'installation de préparation d'eau chaude à distance.
